Europäisches Patentamt

European Patent Office

Office européen des brevets

(11) Publication number: **0 431 752 B1**

## EUROPEAN PATENT SPECIFICATION

(45) Date of publication of patent specification: **14.09.94**

(51) Int. Cl.⁵: **A01N 43/80**, //(A01N43/80, 47:12,37:34,41:10,47:48,43:78, 43:80,47:02,43:16,35:08,37:34)

(21) Application number: **90312064.0**

(22) Date of filing: **02.11.90**

Divisional application 94103388.8 filed on 02/11/90.

The file contains technical information submitted after the application was filed and not included in this specification

(54) **Synergistic microbicidal combinations.**

(30) Priority: **03.11.89 US 431367**

(43) Date of publication of application:
**12.06.91 Bulletin 91/24**

(45) Publication of the grant of the patent:
**14.09.94 Bulletin 94/37**

(84) Designated Contracting States:
**AT BE CH DE DK ES FR GB GR IT LI LU NL SE**

(56) References cited:
**EP-A- 0 187 291**

**CHEMICAL ABSTRACTS, vol. 108, no. 23, 6th june 1988, page 253, abstract no.200218n, Columbus, Ohio, US; &JP-A-62 273 903 (KURITA WATER IND., LTD) 24-11-1987**

**CHEMICAL ABSTRACTS, vol. 109, no. 17, 24th October 1988, page 272, abstract no.144602q, Columbus, Ohio, US; & JP-A-**

**62 270 506 (KURITA WATER IND., LTD) 24-11-1987**

**CHEMICAL ABSTRACTS, vol. 105, no. 19, 10th November 1986, page 260, abstractno. 166884c, Columbus, Ohio, US; & JP-A-61 97 204 (TAKEDA CHEMICAL IND., LTD) 15-05-1986**

(73) Proprietor: **ROHM AND HAAS COMPANY Independence Mall West Philadelphia Pennsylvania 19105 (US)**

(72) Inventor: **Hsu, Jemin Charles 455 Leah Drive Fort Washington, Pennsylvania 19034 (US)**

(74) Representative: **Angell, David Whilton et al ROHM AND HAAS European Operations Patent Department Lennig House 2 Mason's Avenue Croydon CR9 3NB (GB)**

EP 0 431 752 B1

**Description**

This invention concerns microbicidal compositions which include an isothiazolone and another biocide, and which are intended to provide more effective and broader control of micro-organisms in various industrial systems and for household products, agricultural products, and biomedical products, etc. In particular, the present invention relates to the use of a composition of 2-n-octyl-4,5-dichloro-isothiazolin-3-one, hereinafter referred to as 4,5-dichloro-2-octyl-3-isothiazolone, with 3-iodo-2-propynylbutyl-carbamate.

The term "microbicidal" (or "antimicrobial" or "biocidal") as used herein is intended to encompass, but is not restricted to, all bactericidal, fungicidal and algicidal activity.

Isothiazolones are described in U.S.-A-3,761,488; 4,105,431; 4,252,694; 4,265,899 and 4,279,762, and elsewhere. Their use as microbicides is well known.

We have found that compositions formed from 4,5-dichloro-2-octyl-3-isothiazolone and 3-iodo-2-propynylbutylcarbamate afford unexpectedly good synergistic antimicrobial activity against a wide range of microorganisms: the disruptive action on the organisms by the two compounds together is unexpectedly greater than the sum of both compounds taken alone. This synergy does not arise from the expected activity of the components nor from the expected improvement in activity. As a result of the synergy, the effective dose required can be lowered, which is not only more economical but also increases safety margins. The synergistic compositions of the present invention provide more effective and broader control of microorganisms in a number of systems.

The present invention thus provides a composition having microbicidal activity which comprises 4,5-dichloro-2-octyl-3-isothiazolone and 3-iodo-2-propynylbutylcarbamate wherein the weight ratio of 4,5-dichloro-2-octyl-3-isothiazolone to the second component is from about 150:1 to 1:250.

Important applications of the synergistic antimicrobial compositions of the present invention include but are not limited to: inhibiting the growth of bacteria and fungi in aqueous paints and coatings, adhesives, sealants, latex emulsions, and joint cements; preserving wood; preserving cutting fluids, controlling slime-producing bacteria and fungi in pulp and papermills and cooling towers; as a spray or dip treatment for textiles and leather to prevent mold growth; protecting paint films, especially exterior paints, from attack by fungi which occurs during weathering of the paint film; protecting processing equipment from slime deposits during manufacture of cane and beet sugar; preventing microorganism buildup and deposits in air washer or scrubber systems and in industrial fresh water supply systems; preserving fuel; controlling microorganisms contamination and deposits in oil field drilling fluids and muds, and in secondary petroleum recovery processes; preventing bacterial and fungal growth in paper coatings and coating processes; controlling bacterial and fungal growth and deposits during the manufacture of various specialty boards, e.g., cardboard and particle board; preventing sap stain discoloration on freshly cut wood of various kinds; controlling bacterial and fungal growth in clay and pigment slurries of various types; as a hard surface disinfectant to prevent growth of bacteria and fungi on walls, floors, etc.; as a preservative for cosmetic and toiletry raw materials, floor polishes, fabric softeners, household and industrial cleaners; in swimming pools to prevent algae growth; inhibiting the growth of harmful bacteria, yeasts, fungi on plants, trees, fruits, seeds, or soil; preserving agricultural formulations, electrodeposition systems, diagnostic and reagent products, medical devices; protecting animal dip compositions against the buildup of microorganisms, and in photoprocessing to prevent buildup of microorganisms, and the like.

The compositions of the invention may be added separately to any system or may be formulated as a simple mixture comprising the essential ingredients, and if desired a suitable carrier or solvent, or as an aqueous emulsion or dispersion.

The invention also provides a method of inhibiting or preventing the growth of bacteria, fungi or algae in a locus subject or susceptible to contamination thereby, comprising incorporating into or onto the locus in an amount effective to adversely affect the growth of said bacteria, fungi or algae any of the compositions defined above.

The compositions of the invention can be formulated as a solution in a wide range of organic solvents. The solutions generally contain about 5 to 30% by weight of the active composition. It is generally more convenient to provide the compositions in a water-diluted form: this may be accomplished by adding an emulsifier to the organic solution followed by dilution with water.

In general, the weight ratio of 4,5-dichloro-2-octyl-3-isothiazolone to second component in the composition may be in the range of from about 150:1 to about 1:250. The other specific and preferred ratios are given in the examples.

The synergism of two-component compositions is demonstrated by testing a wide range of concentrations and ratios of compounds, generated by two-fold serial dilutions in a Trypticase Soy Broth (Difco) growth medium of a microbicide in one dimension and another microbicide in the second dimension, against a bacterium Escherichia coli (ATCC 11229), or fungi Candida albicans (ATCC 11651), Aspergillus niger (ATCC 6275), or Aureobasidium pullulan (ATCC 9348). Each test tube was inoculated to make about $1\text{-}5 \times 10^7$ bacteria per ml or $1\text{-}5 \times 10^5$ fungi per ml. The lowest concentrations of each compound or mixtures to inhibit visible growth (turbidity) at 37° for E. coli and at 30°C for the fungi for 7 days were taken as the minimum inhibitory concentration (MIC). The MIC were taken as end points of activity. End points for the mixtures of compound A (4,5 dichloro-2-octyl-3- isothiazolone) and compound B (second component microbicide) were then compared with the end points for the isothiazolone A alone and compound B alone. Synergism was determined by a commonly used and accepted method described by Kull, F.C.; Eisman, P.C.; Sylwestrowicz, H.D. and Mayer, R.L., in applied Microbiology 9:538-541 (1961) using the ratio determined by

$$Qa/QA \; + \; Qb/QB \; = \; \text{Synergy Index (SI)}$$

wherein

QA = concentration of compound A in parts per million (ppm), acting alone, which produced an end point.

Qa = concentration of compound A in ppm, in the mixture, which produced an end point.

QB = concentration of compound B in ppm, acting alone, which produced an end point.

Qb = concentration of compound B in ppm, in the mixture, which produced an end point

when the sum of Qa/QA and Qb/QB is greater than one, antagonism is indicated. When the sum is equal to one additivity is indicated, and when less than one synergism is demonstrated.

The test results for demonstration of synergism of microbicide combinations are shown in Tables 1 to 11. Each table concerns the combination of 4,5-dichloro-2-octyl-3-isothiazolone and one other microbicide, and shows:

1. the identity of the second microbicide (compound B);
2. test against E. coli, C. albicans (C. alb), A. niger or A. pullulan (A. pullul)
3. the end-point activity in ppm measured by MIC for compound A alone (QA), for compound B alone (QB), for compound A in the mixture (Qa), or for compound B in the mixture (Qb);
4. the calculation of synergy index (SI) based on the formula SI = Qa/QA + Qb/QB, and the weight ratio of 4,5-dichloro 2-n-octyl-3-isothiazolone (compound A) to compound B in the particular combination (A:B);
5. the range of weight ratios for synergism and the preferred weight ratios. It will be appreciated by those skilled in the art that the ratios given are approximate only.

The MIC values of each compound tested alone (QA or QB) are end-point activities except where the value is expressed as x.10. In these cases, the end-point activity was not seen at the highest tested concentration. For purpose of calculation of the synergy index and for operational definition of MIC, the reported value is twice the highest tested concentration. The value could be an underestimate of the true MIC; thus, the true synergy index could be even lower.

<u>TABLE 1</u>

Compound A = 4,5-dichloro-2-octyl-3-isothiazolone
Compound B = 3-iodo-2-propynylbutylcarbamate

| <u>ORGANISM</u> | end-point activity in ppm | | | | calculations | | | |
|---|---|---|---|---|---|---|---|---|
| | $\underline{Q_A}$ | $\underline{Q_B}$ | $\underline{Q_a}$ | $\underline{Q_b}$ | $\underline{Q_a/Q_A}$ | $\underline{Q_b/Q_B}$ | $\underline{SI}$ | $\underline{A:B}$ |
| A. niger | 16.10 | 4.00 | 4.00 | 2.00 | 0.25 | 0.50 | 0.75 | 2:1 |
| | 16.10 | 4.00 | 8.00 | 0.50 | 0.50 | 0.13 | 0.62 | 16:1 |
| A. pullul | 16.10 | 2.00 | 8.00 | 0.25 | 0.50 | 0.13 | 0.62 | 32:1 |
| C. alb | 16.00 | 4.00 | 8.00 | 2.00 | 0.50 | 0.50 | 1.00 | 4:1 |
| C. alb | 2.00 | 8.00 | 0.25 | 4.00 | 0.13 | 0.50 | 0.63 | 1:16 |
| C. alb | 4.10 | 16.10 | 2.00 | 4.00 | 0.49 | 0.25 | 0.74 | 1:2 |
| C. alb | 32.10 | 16.00 | 4.00 | 8.00 | 0.12 | 0.50 | 0.62 | 1:2 |
| | 32.10 | 16.00 | 16.00 | 2.00 | 0.50 | 0.13 | 0.62 | 8:1 |
| E. coli | 16.00 | 250.00 | 8.00 | 125.00 | 0.50 | 0.50 | 1.00 | 1:16 |
| E. coli | 8.00 | 250.00 | 4.00 | 62.00 | 0.50 | 0.25 | 0.75 | 1:16 |

Synergistic ratios of compound A:compound B range from 32:1 to 1:16; preferred ratios are in the range 32:1 to 1:2.

As can be seen by review of Table 1, the composition of the invention demonstrate synergistic microbicidal activity as measured by minimum inhibitory concentrations (MIC) and show surprisingly greater activity than the algebraic sum of the individual components which make up each composition.

In contrast, an example of non-synergistic combination of 4,5-dichloro-2-octyl-3-isothiazolone and sodium dichlorophene is shown in Table 2. In this example of non-synergism, the microbial activities of either component as measured against <u>E</u>. <u>coli</u> and <u>C</u>. <u>albicans</u> are not affected by the presence or the absence of the other component in the combination. It is also not antagonistic because no loss of activity of either component in the combination was detected.

The synergistic activities of tie compositions of the invention in most cases are applicable to bacteria, fungi, and a mixture of bacteria and fungi. Thus, the combinations not only lower the use-level of biocide but also broaden the spectrum of activity. This is especially useful in situations where either component alone does not achieve the best results due to weak activity against certain organisms.

# EP 0 431 752 B1

<u>TABLE 2 (comparative)</u>

Compound A = 4,5-dichloro-2-octyl-3-isothiazolone
Compound B = Sodium dichlorophene

| ORGANISM | end-point activity in ppm | | | | calculations | | | |
|---|---|---|---|---|---|---|---|---|
| | QA | QB | Qa | Qb | Qa/QA | Qb/QB | SI | A:B |
| C. alb | 4.10 | 16.00 | No effect | | | | | |
| C. alb | 16.00 | 32.00 | No effect | | | | | |
| E. coli | 16.00 | 62.00 | No effect | | | | | |

## Claims

1. A microbicidal composition the first component of which is 4,5-dichloro-2-octyl-3-isothiazolone and the second component of which is 3-iodo-2-propynylbutylcarbamate wherein the weight ratio of first component to second component is from 150:1 to 1:250.

2. Composition according to claim 1, wherein the ratio of isothiazolone to 3-iodo-2-propynylbutylcarbamate is 32:1 to 1:16, preferably from 32:1 to 1:2.

3. A microbicidal product containing from 5 to 30% of a composition according to any claim 1 or 2, a solvent and preferably an emulsifier and water.

4. A method for inhibiting or preventing the growth of bacteria, fungi, or algae in a locus subject or susceptible to contamination which comprises incorporating onto or into the locus, in an amount which is effective to adversely affect the growth of said bacteria, fungi, or algae, a composition according to any of claims 1 to 3.

## Patentansprüche

1. Mikrobiozide Zusammensetzung mit 4,5-Dichlor-2-octyl-3-isothlazolon als dem ersten Bestandteil und 3-Jod-2-propynylbutylcarbamat als dem zweiten Bestandteil, wobei das Gewichtsverhältnis von erstes Bestandteil zu zweites Bestandteil von 150:1 bis 1:250 beträgt.

2. Zusammensetzung nach Anspruch 1,
**dadurch gekennzeichnet,**
daß das Verhältnis von Isothiazolon:3-Jod-2-propynylbutylcarbamat 32:1 bis 1:16, vorzugsweise von 32:1 bis 1:2, beträgt.

3. Mikrobiozides Erzeugnis, enthaltend von 5-30 % einer Zusammensetzung nach eines der Ansprüche 1 oder 2, ein Lösemittel und vorzugsweise einen Emulgator und Wasser.

4. Verfahren zum Hemmen oder Verhindern des Wachstums von Bakterien, Pilzen oder Algen an eines Ort, der verunreinigt oder der gegenüber Verunreinigung empfindlich ist, durch Aufbringen auf oder in den Ort einer wirksamen Menge einer Zusammensetzung nach einem der Ansprüche 1-3, um das Wachstum der Bakterien, Pilze oder Algen gegenteilig zu beeinflussen.

## Revendications

1. Composition microbicide dont le premier composant est la 4,5-dichloro-2-octyl-3-isothiazolone, et le deuxième composant est le 3-iodo-2-propynylbutylcarbamate, dans laquelle le rapport pondéral du premier composant au deuxième composant est de 150:1 à 1:250.

2. Composition selon la revendication 1, dans laquelle le rapport de l'isothiazolone au 3-iodo-2-propynylbutylcarbamate est de 32:1 à 1:16, de préférence de 32:1 à 1:2.

3. Produit microbicide contenant 5 à 30% d'une composition selon l'une quelconque des revendications 1 ou 2, un solvant et de préférence un émulsifiant, et de l'eau.

4. Procédé d'inhibition ou de prévention de la croissance des bactéries, des champignons, ou des algues en un lieu sujet à contamination ou susceptible d'être contaminé, qui comprend l'incorporation sur ce lieu ou dans ce lieu, en une quantité efficace pour nuire à la croissance de ces bactéries, champignons ou algues, d'une composition selon l'une quelconque des revendications 1 à 3.